# EUROPÄISCHE PATENTSCHRIFT

(11) **EP 1 260 933 B1**
(45) Veröffentlichungstag und Bekanntmachung des Hinweises auf die Patenterteilung: **29.03.2006**
(21) Anmeldenummer: 02009898.4
(22) Anmeldetag: 02.05.2002
(51) Int. Cl.: G06K 7/14

(54) **Verfahren zum Erfassen von zweidimensionalen Codes**
Processing for the recognition of two-dimensional codes
Traitement pour la reconnaissance des codes bidimensionnelles

(30) Priorität: 15.05.2001 DE 10123406
(43) Veröffentlichungstag der Anmeldung: 27.11.2002
(73) Patentinhaber: SICK AG, 79183 Waldkirch, Breisgau (DE)
(72) Erfinder: Reichenbach, Jürgen, 79312 Emmendingen (DE)
(74) Vertreter: Manitz, Finsterwald & Partner GbR

(56) Entgegenhaltungen:
- US-A- 5 742 041
- US-A- 5 917 945
- US-B1- 6 181 839
- US-B1- 6 211 940

## Beschreibung

Die vorliegende Erfindung betrifft ein Verfahren zum Erfassen von zweidimensionalen Codes, insbesondere Matrixcodes, gemäß dem Oberbegriff des Anspruchs 1. Eine Verfahren mit den Merkmalen des Oberbegriffs des Anspruchs 1 ist aus der US 6,221,940 B1 bekannt. Weiterhin beschreibt auch die US 5,742,041 ein Verfahren zum Erfassen von zweidimensionalen Codes.

Bei den genannten Codes handelt es sich um zweidimensionale, schachbrettartige Codes, die für die maschinelle Lesung optimiert sind und in dieser Anmeldung generell als Matrixcodes bezeichnet werden. Im Sinne der vorliegenden Anmeldung fallen unter diesen Begriff jedoch alle möglichen zweidimensionalen Codes, auch wenn sie nicht matrixförmig ausgebildet sind. Diese Codes, die sowohl in quadratischer als auch in rechteckiger Form oder in sonstiger zweidimensionaler Anordnung vorliegen können, enthalten üblicherweise ein implizites Fehlerkorrekturverfahren, das auch bei teilweise zerstörten oder überdeckten Codes eine Decodierung durch Lokalisierung und Korrektur der defekten Datenbits ermöglicht. Als Datenbit werden dabei die einzelnen Codeelemente des Matrix codes bezeichnet, die üblicherweise durch weiße und schwarze quadratische beziehungsweise rechteckige Flächen gebildet sind und den Balken und Zwischenräumen beim eindimensionalen Barcode entsprechen. Grundsätzlich können die Datenbits auch eine von der rechteckigen Form abweichende Form besitzen.

Während bei einwandfrei vorliegenden Matrixcodes die bekannten Verfahren zur Erfassung und Erkennung der Codes eine relativ hohe Decodiersicherheit besitzen, besitzen diese Verfahren insbesondere bei Codes mit niedrigen Kontrasten oder bei schlecht gedruckten Codes Probleme bei der Decodierung. Wenn aufgrund der schlechten Vorlage zu viele Datenbits falsch erkannt werden, ist eine Fehlerkorrektur und damit eine Decodierung des Matrixcodes nicht möglich.

Es ist eine Aufgabe der vorliegenden Erfindung, ein Verfahren der eingangs genannten Art so weiterzubilden, daß die Decodiersicherheit, insbesondere auch bei schlecht gedruckten Codes und bei Codes mit niedrigen Kontrasten verbessert wird.

Diese Aufgabe wird ausgehend von einem Verfahren der eingangs genannten Art erfindungsgemäß dadurch gelöst, daß diejenigen sogenannten unsicheren Bildbereiche ermittelt werden, deren Grauwert jeweils nahe an dem Binarisierungsschwellenwert liegt, und daß diese unsicheren Bildbereiche bei der Fehlerkorrektur besonders berücksichtigt werden.

Das erfindungsgemäße Verfahren verbessert somit die Fehlerkorrektur dadurch, daß die Datenbits, die mit höherer Wahrscheinlichkeit Probleme bei der Decodierung verursachen, gesondert behandelt werden. Gerade die Datenbits, die beispielsweise aufgrund einer schlechten Druckvorlage oder aufgrund eines niedrigen Kontrastes nicht vollkommen schwarz beziehungsweise vollkommen weiß sind, sondern einen Grauwert besitzen, der nahe an dem Binarisierungsschwellenwert liegt, werden bei der Binarisierung mit der höchsten Wahrscheinlichkeit fehlerhafte Werte verursachen. Die in der erzeugten Bitfolge diesen Datenbits entsprechenden sogenannten unsicheren Bits bei der Fehlerkorrektur besonders zu berücksichtigen, führt letztendlich dazu, daß die Fehlerkorrektur für die Gesamtdecodierung verbessert werden kann.

Nach einer vorteilhaften Ausführungsform der Erfindung erfolgt die besondere Berücksichtigung der unsicheren Bildbereiche dadurch, daß für wenigstens einen der unsicheren Bildbereiche dem korrespondierenden Datenbit ein anderer Wert zugeschrieben wird als durch das Verhältnis des erfaßten Grauwertes des Bildbereichs zu dem Binarisierungsschwellenwert vorgegeben ist.

Beispielsweise kann nach einer bevorzugten Ausführungsform zur Fehlerkorrektur ein Fehlerkorrekturalgorithmus verwendet werden, der für eine bestimmte Anzahl von Bits der Bitfolge neben den Werten 0 und 1 auch den Wert "unbestimmt" zuläßt, wobei zumindest ein Teil oder alle der den unsicheren Bildbereichen zugeordneten sogenannten unsicheren Bits der Bitfolge dem Fehlerkorrekturalgorithmus mit dem Wert "unbestimmt" zugeführt wird. Bei solchen Fehlerkorrekturalgorithmen können die unsicheren Bits als sogenannte "erasure bits" eingegeben werden. Diese "erasure bits" sind von ihrem Wert her unbestimmt und können durch entsprechende Fehlerkorrekturalgorithmen einfacher korrigiert werden, als Bits, deren jeweiliger Wert falsch ist und deren Position in der Bitfolge unbekannt ist. Durch Vorgabe der unsicheren Bits als "erasure bits" können sowohl deren Positionen innerhalb der Bitfolge an den Fehlerkorrekturalgorithmus übergeben werden als auch der korrekte Wert für diese Bits einfacher bestimmt werden.

Wird ein Fehlerkorrekturalgorithmus verwendet, bei dem die Möglichkeit, "erasure bits" als Eingabe zu definieren, nicht vorhanden ist, so können eine Vielzahl von unterschiedlichen Bitfolgen erzeugt werden, indem die Werte der den unsicheren Bildbereichen zugeordneten sogenannten unsicheren Bits in unterschiedlichen Variationen invertiert werden. Dabei werden die unterschiedlichen Bitfolgen solange dem Fehlerkorrekturalgorithmus zugeführt, bis eine erfolgreiche Fehlerkorrektur durchgeführt werden konnte. Üblicherweise wird als erste Bitfolge die Originalbitfolge gewählt, bei der somit die unsicheren Bits ihren durch die Binarisierung ermittelten Wert besitzen. Führt diese Originalbitfolge nicht zu einer erfolgreichen Fehlerkorrektur und damit zu einer erfolgreichen Decodierung, so werden die angegebenen unterschiedlichen Bitfolgen durch Variieren des jeweiligen Wertes der unsicheren Bits erzeugt und dem Fehlerkorrekturalgorithmus zugeführt.

In analoger Weise können die Bitfolgen auch erzeugt werden, indem die Werte zumindest eines Teils oder aller der den unsicheren Bildbereichen zugeordneten unsicheren Bits in unterschiedlichen Variationen auf "unbestimmt" gesetzt werden.

Bevorzugt werden zur Erzeugung der unterschiedlichen Bitfolgen die unsicheren Bits in der Reihenfolge ihrer Unsicherheit invertiert oder auf "unbestimmt" gesetzt, das heißt, daß zuerst das Bit invertiert oder auf "unbestimmt" gesetzt wird, für das der Grauwert des ihm zugeordneten Bildbereichs dem Binarisierungsschwellenwert am nächsten liegt. Die unsicheren Bits werden somit entsprechend ihrer Wertigkeit invertiert bzw. auf "unbestimmt" gesetzt. Dazu ist es sinnvoll, die unsicheren Bits zunächst entsprechend ihrer Unsicherheit zu sortieren, wobei die Bits die höchste Wertigkeit besitzen, deren Grauwert zu dem Binarisierungsschwellenwert den geringsten Abstand besitzt.

Vorteilhaft wird die Anzahl der zu invertierenden bzw. auf "unbestimmt" zu setzenden unsicheren Bits auf einen Maximalwert beschränkt, damit der Aufwand für die Decodierung in einem vorgegebenen Rahmen gehalten werden kann. Auch aus Sicherheitsgründen kann eine solche Beschränkung sinnvoll sein, da bei einer zu hohen Anzahl von invertierten oder auf "unbestimmt" gesetzten Bits gleichzeitig die Wahrscheinlichkeit für eine fehlerhafte Decodierung steigt.

Vorteilhaft werden als unsichere Bildbereiche diejenigen Bildbereiche eingestuft, deren Grauwert jeweils einen bestimmten, insbesondere einstellbaren Abstand zu dem Binarisierungsschwellenwert unterschreitet. Dabei kann der Abstand sowohl eine Grenze oberhalb als auch unterhalb des Binarisierungsschwellenwertes bilden.

Nach einer vorteilhaften Ausführungsform der Erfindung werden die Positionen der unsicheren Bildbereiche im Grauwertbild erfaßt. Dabei wird insbesondere zur Erfassung der Positionen der unsicheren Bildbereiche jeweils die Position des dem unsicheren Bildbereich zugeordneten sogenannten unsicheren Bits in der erzeugten Bitfolge erfaßt. Die Erfassung der Positionen der unsicheren Bits ist insbesondere dann sinnvoll, wenn diese Positionen bei der Eingabe der "erasure bits" in den Fehlerkorrekturalgorithmus erforderlich ist. Ebenso ist die Bestimmung der Position der unsicheren Bits innerhalb der Bitfolge erforderlich, um beispielsweise durch entsprechende Bitmasken die gewünschte Invertierung der unsicheren Bits innerhalb der Bitfolge gezielt durchführen zu können.

Nach einer weiteren vorteilhaften Ausführungsform der Erfindung wird der Binarisierungsschwellenwert anhand von vorgegebenen Datenbits im Matrixcode ermittelt. Dabei kann es sich beispielsweise um ausgesuchte, repräsentative Punkte im Matrixcode handeln. Grundsätzlich ist es auch möglich, daß als Binarisierungsschwellenwert ein vorgegebener Wert oder ein aus der Gesamtheit der erfaßten Datenbits bestimmter Wert verwendet wird.

Weiterhin ist es möglich, den Binarisierungsschwellenwert abhängig von dem Grauwertverlauf über die erfaßten Bildbereiche dynamisch insbesondere fortlaufend zu ermitteln. Dabei kann insbesondere ein mittlerer Grauwertverlauf berücksichtigt werden. Dies hat den Vorteil, daß bei der Ermittlung des Binarisierungsschwellenwerts eine mögliche Änderung der Grauwerte über die Fläche des erfaßten Grauwertbildes berücksichtigt wird, die beispielsweise durch besondere Lichtverhältnisse oder durch Aufbringung eines Codes auf einer gekrümmten Oberfläche auftreten kann.

Bevorzugt werden zur Ermittlung des dynamischen Binarisierungsschwellwerts nur solche Bildbereiche verwendet, deren Grauwert von dem aktuellen Binarisierungsschwellenwert jeweils einen bestimmten Mindestabstand besitzt. Dadurch wird verhindert, daß bei der Anpassungsberechnung des dynamischen Binarisierungsschwellenwerts Bildbereiche berücksichtigt werden, die - aufgrund ihres nahe am Binarisierungsschwellenwert liegenden Grauwertes - möglicherweise falsch binarisiert wurden.

Als Grauwert eines Bildbereichs kann jeweils der Grauwert des geometrischen Mittelpunktes des Bildbereichs verwendet werden. Dazu können beispielsweise jeweils die Mittelpunkte der Bildbereiche des erfaßten Grauwertbildes abgetastet und der jeweilige Grauwert dieser Mittelpunkte bestimmt werden. Grundsätzlich ist jedoch auch jede sonstige geeignete Grauwertbestimmung für das erfindungsgemäße Verfahren möglich. So kann beispielsweise als Grauwert eines Bildbereichs jeweils ein über die Fläche des Bildbereichs ermittelter mittlerer Grauwert verwendet werden.

Bevorzugt ist die maximale Anzahl der von dem Fehlerkorrekturalgorithmus korrigierbaren Bitfehler einstellbar. Auch hierdurch wird der Aufwand für die Decodierung begrenzt.

Das erfindungsgemäße Verfahren ist bei beliebigen zweidimensionalen Codes anwendbar, unter anderem bei der Variante Datamatrix ECC 200, bei dem QR-Code oder bei dem Maxicode.

Die Erfassung des Grauwertbildes kann durch jede geeignete Bilderfassungseinheit, beispielsweise durch eine CCD-Kamera, erfolgen. Die Grauwertbilder können beispielsweise als 8-Bit-Grauwertbilder abgespeichert werden, so daß jedes Bildpixel durch einen 8-Bit-Grauwert (256 Stufen) repräsentiert ist. Grundsätzlich ist jedoch auch eine kleinere oder eine größere Graustufentiefe möglich.

Enthält der erfaßte Matrixcode keinen Fehler, so kann er unmittelbar decodiert werden. Sind jedoch Fehler in der Bitfolge vorhanden, so liefert der Fehlerkorrekturalgorithmus bevorzugt entweder eine fehlerkorrigierte Bitfolge oder er erzeugt ein Fehlersignal, wenn eine Fehlerkorrektur nicht möglich war. Auf diese Weise wird eine falsche Decodierung des Matrixcodes zuverlässig verhindert.

Ist eine Fehlerkorrigierung möglich, so wird letztlich die fehlerkorrigierte Bitfolge decodiert.

Weitere vorteilhafte Ausführungsformen sind in den Unteransprüchen angegeben.

Die Erfindung wird nachfolgend anhand eines Ausführungsbeispiels unter Bezugnahme auf die Zeichnung näher beschrieben; in dieser zeigen:
- Fig. 1: ein Beispiel eines Matrixcodes mit 20 Zeilen und 20 Spalten und
- Fig. 2: ein Grauwert-Histogramm bei der Erfassung eines typischen Matrixcodes mit einer Grauwertauflösung von 8 Bit (256 Stufen).

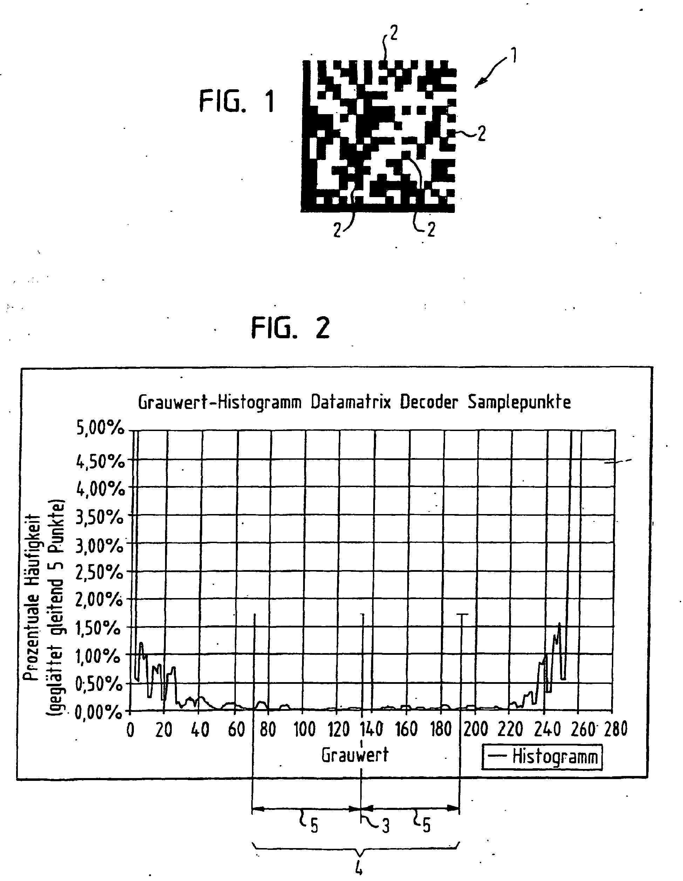

Fig. 1 zeigt einen quadratischen Matrixcode 1, der eine Vielzahl von quadratischen, schwarzen und weißen, in Zeilen und Spalten angeordneten Datenbits 2 umfaßt.

In der in Fig. 1 ganz linken Spalte sowie in der in Fig. 1 ganz unten dargestellten Zeile sind die Datenbits 2 jeweils alle schwarz, während in der in Fig. 1 dargestellten obersten Zeile und in der ganz rechten Spalte die Datenbits jeweils alternierend schwarz und weiß sind. Durch diese spezielle Ausgestaltung, die auch als "timing pattern" bezeichnet wird, ist eine Lokalisierung der Lage und Drehlage des Codes und damit eine Ermittlung der Größe und Anzahl der Datenbits 2 in horizontaler und vertikaler Richtung möglich.

Gemäß der Erfindung wird der Matrixcode 1 durch eine Bilderfassungseinheit, beispielsweise eine Kamera erfaßt und in ein Grauwertbild abgebildet. Die Grauwerte können dabei beispielsweise mit 8 Bit codiert werden, so daß jedem Bildpixel ein Grauwert aus 256 Grauwertstufen zugeordnet wird.

Je nach Auflösung der beispielsweise verwendeten CCD-Kamera enthält jedes Datenbit 2 eine Vielzahl von Bildpixeln, die beispielsweise abhängig von der Druckqualität des Matrixcodes 1, unterschiedliche Grauwerte besitzen können.

Nachdem durch die speziellen Randzeilen und Spalten des Matrixcodes 1 dieser so gedreht wurde, daß die Zeilen und Spalten beispielsweise in einem kartesischen Koordinatensystem der Bilderfassungseinheit ausgerichtet sind, wird durch übliche Bilduntersuchungsverfahren die Größe und die Anzahl der Datenbits 2 in horizontaler und vertikaler Richtung bestimmt.

Anschließend wird mit Hilfe von ausgesuchten, repräsentativen Punkten im Matrixcode 1 eine Binarisierungsschwelle ermittelt. Bei der Binarisierungsschwelle handelt es sich dabei um eine Mittelwert der erfaßten Grauwerte, der den Schwellenwert für die Einstufung von erfaßten Grauwerten als "schwarz" oder "weiß" darstellt. Bei einer entsprechenden Binarisierung der die einzelnen Datenbits 2 innerhalb des Grauwertbildes repräsentierenden Datenbereiche wird erfindungsgemäß abhängig von der Binarisierungsschwelle eine Bitfolge erzeugt, wobei jedes Bit beispielsweise für einen als weiß eingestuften Bildbereich eine 1 und für einen als schwarz eingestuften Bildbereich eine 0 zugeordnet bekommt. Auf diese Weise entsteht eine Bitfolge mit der Länge x mal y, wobei x die horizontale und y die vertikale Anzahl der Datenbits 2 im Matrixcode 1 darstellt.

Zur Ermittlung des Grauwertes eines jeweils einem Datenbit 2 entsprechenden Bildbereichs des erfaßten Grauwertbildes kann beispielsweise eine Abtastung der Mittelpunkte dieser Bildbereiche erfolgen und dem Bildbereich der Grauwert dieses Mittelpunktes zugewiesen werden.

In Fig. 2 wird beispielhaft ein Grauwert-Histogramm für ein typisches Abbild eines mit 8 Bit, das heißt 256 Graustufen erzeugten Abbildes eines typischen Matrixcodes 1 dargestellt. Dabei sind auf der horizontalen Achse die möglichen Grauwerte zwischen 0 und 256 dargestellt, während auf der vertikalen Achse jeweils deren prozentuale Häufigkeit innerhalb des Matrixcodes aufgetragen sind. Man erkennt, daß die häufigsten Grauwerte im Bereich von 0 (schwarz) und 255 (weiß) liegen. Als Binarisierungsschwellenwert ist in der Fig. 2 ein Wert von 130 durch eine vertikale Linie 3 gekennzeichnet. Weiterhin ist ein Bereich 4 gekennzeichnet, der jeweils durch einen Abstand 5 nach oben und nach unten ausgehend vom Binarisierungsschwellenwert 130 definiert ist. Der Bereich 4 bildet den sogenannten Unsicherheitsbereich, in dem die Grauwerte liegen, die gemäß der vorliegenden Erfindung als unsicher eingestuft werden. Demgemäß werden Bildbereiche, die Grauwerte innerhalb des Bereichs 4 besitzen sowie deren zugeordnete Bits der erzeugten Bitfolge als unsichere Bildbereiche beziehungsweise als unsichere Bits bezeichnet und eingestuft. Für diese Bits ist die Wahrscheinlichkeit eines Bitfehlers am größten, so daß für diese Bits erfindungsgemäß eine besondere Fehlerkorrektur vorgesehen wird.

Bei dem erfindungsgemäßen Verfahren können unterschiedliche Fehlerkorrekturverfahren verwendet werden. Bekannt ist beispielsweise das Reed-Solomon-Fehlerkorrekturverfahren, wobei die ECC 200-Fehlerkorrektur eine bevorzugte Ausführung dieses Verfahrens und damit eine Spezifikation darstellt, wie die Fehlerkorrektur-Wörter generiert werden. Für diese besondere Spezifikation der Fehlerkorrektur existieren unterschiedliche Algorithmen. Beispielsweise kann nach dem Berlekamp-Massey-Algorithmus eine ECC 200-Fehlerkorrektur durchgeführt werden, bei der die Eingabe von sogenannten "erasure bits" möglich ist. In diesem Fall kann für die unsicheren Bits anstelle von 0 oder 1 als Wert jeweils "unbestimmt" angegeben werden. Für diese "erasure bits" ist die Fehlerkorrektur deutlich einfacher als für Bits, deren Wert falsch ist und deren Position im Bitstrom unbestimmt ist. Dies führt dazu, daß eine deutlich größere Anzahl von erasure bits korrigiert werden kann. Die Anzahl der korrigierbaren erasure bits kann doppelt so hoch sein wie die Anzahl korrigierbaren Bits ohne Berücksichtigung von erasure bits.

Wird anstelle des Berlekamp-Massey-Algorithmus beispielsweise der Peterson-Gorenstein-Zierler-Algorithinus verwendet, so können bei der Fehlerkorrektur erasure bits hingegen nicht berücksichtigt werden. Bei solchen Fehlerkorrekturalgorithmen, bei denen nicht die Möglichkeit der Eingabe von "erasure bits" besteht, kann erfindungsgemäß eine Verbesserung der Fehlerkorrektur auf folgende Weise erreicht werden.

Zunächst werden die unsicheren Bits gemäß ihrer Wertigkeit, das heißt gemäß ihrer Unsicherheit sortiert. Die Unsicherheit ist dabei um so größer, je kleiner der Abstand des jeweiligen Grauwertes des zugehörigen Bildbereiches zu dem Binarisierungsschwellenwert ist.

In der nachfolgend dargestellten Tabelle sind drei unsichere Bits eingetragen, die von dem Binarisierungsschwellenwert 130 unterschiedliche Abstände besitzen. Bit Nr. 1 besitzt einen Grauwert von 128, der unterhalb der Binarisierungsschwelle von 130 liegt und somit zu einem resultierenden Binärwert von 0 führt. Der Abstand zu dem Binarisierungsschwellenwert beträgt 2.

Bit Nr. 2 besitzt einen Grauwert von 145, der oberhalb der Binarisierungsschwelle von 130 liegt und somit zu einem resultierenden Binärwert von 1 führt. Der Abstand zu dem Binarisierungsschwellenwert beträgt 15.

Bit Nr. 3 besitzt einen Grauwert von 112 und damit einen resultierenden Binärwert von 0. Der Abstand zum Binarisierungsschwellenwert beträgt 18.

Somit besitzt Bit Nr. 1 den kleinsten, Bit Nr. 2 den mittleren und Bit Nr. 3 den größten Abstand zum Binarisierungsschwellenwert, so daß die Bits in der Tabelle gemäß ihrer Unsicherheit in absteigender Reihenfolge sortiert sind.

| **Bit Nummer** | **1** | **2** | **3** |
|---|---|---|---|
| Grauwert | 128 | 145 | 112 |
| Result. Binärwert | 0 | 1 | 0 |
| Abstand zur Binarisierungsschwelle | 2 | 15 | 18 |
| Unsicherheit | Am größten | Mittel | Am kleinsten |

Falls die dem Fehlerkorrekturalgorithmus zugeführte Bitfolge mit den ursprünglich berechneten Binärwerten nicht korrigiert und damit nicht decodiert werden kann, werden gemäß der Erfindung eine Vielzahl von unterschiedlichen Bitfolgen erzeugt. Dabei wird ausgehend vom unsichersten Bit jeweils der Bitwert für die Zuführung in den Fehlerkorrekturalgorithmus nacheinander invertiert. Auf diese Weise entsteht eine neue, gesamte Bitfolge, die der Fehlerkorrektur unterworfen wird.

Bei beispielsweise drei unsicheren Bits entstehen auf diese Weise 2³ = 8 mögliche Bitkombinationen und damit acht mögliche Gesamtbitfolgen.

In der nachfolgend dargestellten Tabelle sind für das oben angegebene Beispiel für alle acht möglichen Bitkombinationen jeweils die Muster für die Invertierung sowie die resultierenden Bitfolgen für die drei unsicheren Bits dargestellt.

| **Nr.** | **Muster für Invertierung** | **Resultierende Bitfolge der unsicheren Bits** |
|---|---|---|
| 1 (= original) | 000 | 010 |
| 2 | 100 | 110 |
| 3 | 010 | 000 |
| 4 | 110 | 100 |
| 5 | 001 | 011 |
| 6 | 101 | 111 |
| 7 | 011 | 001 |
| 8 | 111 | 101 (= alle invertiert) |

In der ersten Zeile ist als Invertierungsmaske bzw. -muster "000" angegeben, das heißt, daß alle drei Bits ihren Originalwert behalten.

In der zweiten Zeile ist das unsicherste Bit mit dem Grauwert 128 invertiert, was durch die Invertierungsmaske "100" angedeutet ist. Die resultierende Bitfolge ergibt sich für die unsicheren Bits zu "110". In entsprechender Weise werden die unsicheren Bits solange in absteigender Richtung ihrer Unsicherheit invertiert, bis der Fehlerkorrekturalgorithmus eine erfolgreiche Fehlerkorrektur durchführen konnte.

Ist eine Fehlerkorrektur mit keiner der unterschiedlichen Invertierungen möglich, so wird eine Fehlerkennung ausgegeben.

Die unsicheren Bits sind in der Praxis normalerweise nicht wie in der Tabelle dargezeigt unmittelbar nebeneinander angeordnet, sondern über die gesamte Bitfolge verteilt. Daher müssen die Positionen der einzelnen unsicheren Bits bestimmt werden und bekannt sein, um die Invertierungsmasken anhand der bekannten Bitpositionen auf die Bitfolge anwenden zu können.

Anstelle der beschriebenen Invertierung können die in den "Invertierungsmasken" mit "1" gekennzeichneten Bits auch jeweils mit "unbestimmt" besetzt werden, um auf diese Weise unterschiedliche Bitfolgen für die Fehlerkorrektur zu erhalten. Anhand der auf diese Weise erzeugten Bitfolgen kann dann mit entsprechenden Fehlerkorrekturalgorithmen bei Berücksichtigung dieser "erasure bits" die Fehlerkorrektur durchgeführt und - bei erfolgreicher Fehlerkorrektur - der Code decodiert werden.

### Bezugszeichenliste

- 1: Matrixcode
- 2: Datenbit
- 3: Linie für den Binarisierungsschwellenwert
- 4: Unsicherheitsbereich
- 5: Abstand

## Patentansprüche

1. Verfahren zum Erfassen von zweidimensionalen Codes (1), insbesondere Matrixcodes, die eine Vielzahl von zweidimensional, insbesondere matrixförmig angeordneten, hellen und dunklen Datenbits (2) umfassen, bei dem der Code (1) als Grauwertbild erfaßt wird, das erfaßte Grauwertbild in zu den einzelnen Datenbits (2) korrespondierende Bildbereiche aufgeteilt wird, ein einen bestimmten Grauwert repräsentierender Binarisierungsschwellenwert (3) für die Bildbereiche bestimmt wird, mittels des Binarisierungsschwellenwerts (3) jeweils eine Binarisierung des Grauwerts der einzelnen Bildbereiche zur Erzeugung einer die Datenbits (2) repräsentierenden, aus den Werten 0 und 1 bestehenden Bitfolge durchgeführt wird, und die Bitfolge einem Fehlerkorrekturalgorithmus zum Erkennen und/oder Korrigieren von Bitfehlern innerhalb der Bitfolge zugeführt wird, wobei diejenigen sogenannten unsicheren Bildbereiche (4) ermittelt werden, deren Grauwert jeweils nahe an dem Binarisierungsschwellenwert (3) liegt, und diese unsicheren Bildbereiche (4) bei der Fehlerkorrektur besonders berücksichtigt werden,
**dadurch gekennzeichnet,**
**daß** eine Vielzahl von unterschiedlichen Bitfolgen erzeugt werden, indem die Werte zumindest eines Teils der den unsicheren Bildbereichen (4) zugeordneten sogenannten unsicheren Bits in unterschiedlichen Variationen invertiert oder auf "unbestimmt" gesetzt werden, wobei die unterschiedlichen Bitfolgen solange dem Fehlerkorrekturalgorithmus zugeführt werden, bis eine erfolgreiche Fehlerkorrektur durchgeführt werden konnte.

2. Verfahren nach Anspruch 1,
**dadurch gekennzeichnet ,**
**daß** die besondere Berücksichtigung der unsicheren Bildbereiche (4) **dadurch** erfolgt, daß für wenigstens einen der unsicheren Bildbereiche (4) dem korrespondierenden Datenbit (2) ein anderer Wert zugeschrieben wird als durch das Verhältnis des erfaßten Grauwertes des Bildbereichs (4) zu dem Binarisierungsschwellenwert (3) vorgegeben ist.

3. Verfahren nach Anspruch 1 oder 2,
**dadurch gekennzeichnet,**
**daß** zur Fehlerkorrektur ein Fehlerkorrekturalgorithmus verwendet wird, der für eine bestimmte Anzahl von Bits der Bitfolge neben den Werten 0 und 1 auch den Wert "unbestimmt" zuläßt, und daß zumindest ein Teil der den unsicheren Bildbereichen (4) zugeordneten sogenannten unsicheren Bits der Bitfolge dem Fehlerkorrekturalgorithmus mit dem Wert "unbestimmt" zugeführt wird.

4. Verfahren nach einem der vorhergehenden Ansprüche,
**dadurch gekennzeichnet ,**
**daß** zur Fehlerkorrektur der Reed-Solomon-Algorithmus verwendet wird.

5. Verfahren nach einem der vorhergehenden Ansprüche,
**dadurch gekennzeichnet ,**
**daß** zur Erzeugung der unterschiedlichen Bitfolgen die unsicheren Bits in der Reihenfolge ihrer Unsicherheit invertiert oder auf "unbestimmt" gesetzt werden, d.h. daß zuerst das Bit invertiert oder auf "unbestimmt" gesetzt wird, für das der Grauwert des ihm zugeordneten Bildbereichs dem Binarisierungsschwellenwert (3) am nächsten liegt.

6. Verfahren nach einem der vorhergehenden Ansprüche,
**dadurch gekennzeichnet,**
**daß** zur Erzeugung jeder Bitfolge keines, eines oder mehrere unsichere Bits invertiert oder auf "unbestimmt" gesetzt werden und/oder daß die Anzahl der zu invertierenden oder auf "unbestimmt" zu setzenden unsicheren Bits auf einen Maximalwert beschränkt wird.

7. Verfahren nach einem der vorhergehenden Ansprüche,
**dadurch gekennzeichnet ,**
**daß** als unsichere Bildbereiche (4) diejenigen Bildbereiche eingestuft werden, deren Grauwert jeweils einen bestimmten, insbesondere einstellbaren Abstand (5) zu dem Binarisierungsschwellenwert (3) unterschreitet.

8. Verfahren nach einem der vorhergehenden Ansprüche,
**dadurch gekennzeichnet ,**
**daß** die Positionen der unsicheren Bildbereiche (4) im Grauwertbild erfaßt werden,
insbesondere daß zur Erfassung der Positionen der unsicheren Bildbereiche (4) jeweils die Position des dem unsicheren Bildbereich (4) zugeordneten sogenannten unsicheren Bits in der erzeugten Bitfolge erfaßt wird.

9. Verfahren nach einem der vorhergehenden Ansprüche,
**dadurch gekennzeichnet,**
**daß** der Binarisierungsschwellenwert (3) anhand von vorgegebenen Datenbits (2) im Code (1) ermittelt wird oder
**daß** als Binarisierungsschwellenwert (3) ein vorgegebener Wert verwendet wird oder
**daß** der Binarisierungsschwellenwert (3) abhängig von dem Grauwertverlauf über die erfaßten Bildbereiche dynamisch insbesondere fortlaufend ermittelt wird.

10. Verfahren nach einem der vorhergehenden Ansprüche,
**dadurch gekennzeichnet ,**
**daß** zur Ermittlung des dynamischen Binarisierungsschwellenwerts (3) nur solche Bildbereiche verwendet werden, deren Grauwert von dem aktuellen Binarisierungsschwellenwert (3) jeweils einen bestimmten Mindestabstand (5) besitzt.

11. Verfahren nach einem der vorhergehenden Ansprüche,
**dadurch gekennzeichnet,**
**daß** als Grauwert eines Bildbereichs jeweils der Grauwert des geometrischen Mittelpunktes des Bildbereiches verwendet wird oder daß als Grauwert eines Bildbereichs jeweils ein über die Fläche des Bildbereichs ermittelter mittlerer Grauwert verwendet wird.

12. Verfahren nach einem der vorhergehenden Ansprüche,
**dadurch gekennzeichnet ,**
**daß** die maximale Anzahl der von dem Fehlerkorrekturalgorithmus korrigierbaren Bitfehler einstellbar ist und/oder
**daß** als Code (1) der Code Datamatrix ECC 200, der QR-Code oder der Maxicode verwendet werden.

13. Verfahren nach einem der vorhergehenden Ansprüche,
**dadurch gekennzeichnet ,**
**daß** der Fehlerkorrekturalgorithmus entweder eine fehlerkorrigierte Bitfolge liefert oder ein Fehlersignal erzeugt, wenn eine Fehlerkorrektur nicht möglich war.

14. Verfahren nach Anspruch 13,
**dadurch gekennzeichnet ,**
**daß** die fehlerkorngierte Bitfolge dekodiert wird.

## Claims

1. A method of detecting two-dimensional codes (1), in particular matrix codes, which include a plurality of light and dark data bits (2) arranged two dimensionally, in particular in matrix form, wherein the code (1) is detected as a gray scale value image; wherein the detected gray scale value image is split into image areas corresponding to the individual data bits (2); wherein a binarizing threshold (3) representing a specific gray scale value is determined for the image areas; wherein a respective binarizing of the gray scale value of the individual image areas is carried out by means of the binarizing threshold (3) to produce a bit sequence which represents the data bits (2) and consists of the values 0 and 1; and wherein the bit sequence is supplied to an error correction algorithm to recognize and/or correct bit errors within the bit sequence, wherein those so-called uncertain image areas (4) are determined whose gray scale values each lie close to the binarizing threshold (3) and these uncertain image areas (4) are taken into special account in the error correction,
**characterized in that**
a plurality of different bit sequences are produced **in that** the values of at least some of the so-called uncertain bits associated with the uncertain image areas (4) are inverted in different variations or are set to "indefinite", with the different bit sequences being supplied to the error correction algorithm until a successful error correction can be carried out

2. A method in accordance with claim 1, **characterized in that** the special taking into account of the uncertain image areas (4) is carried out **in that**, for at least one of the uncertain image areas (4), a different value is assigned to the corresponding data bit (2) than is pre-determined by the ratio of the detected gray scale value of the image area (4) to the binarizing threshold (3).

3. A method in accordance with claim 1 or claim 2, **characterized in that** an error correction algorithm is used for the error correction which also allows the value "indefinite" for a certain number of bits of the bit sequence in addition to the values 0 and 1; and **in that** at least some of the so-called uncertain bits of the bit sequence associated with the uncertain image areas (4) are supplied to the error correction algorithm with the value "indefinite".

4. A method in accordance with any one of the preceding claims, **characterized in that** the Reed-Solomon algorithm is used for the error correction.

5. A method in accordance with any one of the preceding claims, **characterized in that**, to produce the different bit sequences, the uncertain bits are inverted in the order of their uncertainty or are set to "indefinite", i.e. **in that** first that bit is inverted or set to "indefinite" for which the gray scale value of the image area associated with it lies closest to the binarizing threshold (3).

6. A method in accordance with any one of the preceding claims, **characterized in that**, to produce each bit sequences no, one or multiple uncertain bits are inverted or set to "indefinite"; and/or **in that** the number of uncertain bits to be inverted or set to "indefinite" is limited to a maximum value.

7. A method in accordance with any one of the preceding claims, **characterized in that** those image areas are classified as uncertain image areas (4) whose gray scale values each fall below a specific distance (5), in particular an adjustable distance, from the binarizing threshold (3).

8. A method in accordance with any one of the preceding claims, **characterized in that** the positions of the uncertain image areas (4) in the gray scale value image are detected; in paricular **in that**, to detect the positions of the uncertain image areas (4), the respective position of the so-called uncertain bit associated with the uncertain image area (4) in the bit sequence produced is detected.

9. A method in accordance with any one of the preceding claims, **characterized in that** the binarizing threshold (3) is determined using pre-set data bits (2) in the code; or **in that** a pre-determined value is used as the binarizing threshold (3); or **in that** the binarizing threshold (3) is determined dynamically, in particular continuously, in dependence on the gray scale value development over the detected image areas.

10. A method in accordance with any one of the preceding claims, **characterized in that** only those image areas are used to determine the dynamic binarizing threshold (3) whose gray scale values have a respective specific minimum distance (5) from the current binarizing threshold (3).

11. A method in accordance with any one of the preceding claims, **characterized in that** the respective gray scale value of the geometrical center of the image area is used as the gray scale value of an image area; or **in that** a respective mean gray scale value determined over the surface of the image area is used as the grey scale value of an image area.

12. A method in accordance with any one of the preceding claims, **characterized in that** the maximum number of the bit errors which can be corrected by the error calculation algorithm can be set; and/or **in that** the code Datamatrix ECC 200, the QR code or the Maxicode are used as the code (1).

13. A method in accordance with any one of the preceding claims, **characterized in that** the error correction algorithm either supplies an error-corrected bit sequence or produces an error signal if an error correction was not possible.

14. A method in accordance with claim 13, **characterized in that** the error-corrected bit sequence is decoded.

## Revendications

1. Procédé pour la saisie de codes bidimensionnels (1), en particulier de codes de matrice, qui comprennent une multitude de bits de données clairs et sombres disposés en forme bidimensionnelle, en particulier en forme de matrice, dans lequel le code (1) est saisi comme image en valeurs de gris, l'image saisie en valeurs de gris est subdivisée en zones d'image correspondantes aux bits de données individuels (2), une valeur seuil de conversion binaire (3) représentative d'une valeur de gris déterminée est déterminée pour les zones d'image, au moyen de la valeur seuil de conversion binaire (3) on réalise une conversion binaire respective de la valeur de gris des zones d'image individuelles pour générer une séquence de bits représentative des bits de données (2) et constituée des valeurs 0 et 1, et on soumet la séquence de bits à un algorithme de correction d'erreur pour reconnaître et/ou corriger des erreurs de bits à l'intérieur de la séquence de bits, procédé dans lequel on détecte les zones d'image dites incertaines (4) dont la valeur de gris est proche de la valeur seuil respective de conversion binaire (3) et ces zones d'image incertaines (4) sont particulièrement prises en compte lors de la correction des erreurs,
**caractérisé en ce que**
on génère une multitude de séquences de bits différentes, en invertissant dans différentes variations ou en mettant à une valeur indéterminée les valeurs d'une partie au moins des bits dits incertains associés aux zones de bits incertaines (4), les différentes séquences de bits étant soumises à l'algorithme de correction d'erreur aussi longtemps que l'on puisse effectuer avec succès une correction d'erreur.

2. Procédé selon la revendication 1,
**caractérisé en ce que**
la prise en compte particulière des zones d'image incertaines (4) s'effectue par attribution au bit de données correspondant (2), pour l'une au moins des zones d'image incertaines (4), une valeur autre que celle qui s'impose par le rapport de la valeur de gris saisie de la zone d'image (4) sur la valeur seuil de conversion binaire (3).

3. Procédé selon l'une ou l'autre des revendications 1 et 2,
**caractérisé en ce que**
pour la correction d'erreur, on utilise un algorithme de correction d'erreur qui autorise, pour un certain nombre de bits de la séquence de bits, outre les valeurs 0 et 1, également la valeur "indéterminée", et **en ce qu'**une partie au moins des bits dits incertains de la séquence de bits associés aux zones d'image incertaines (4) est soumise à l'algorithme de correction d'erreur avec la valeur "indéterminée".

4. Procédé selon l'une des revendications précédentes,
**caractérisé en ce que**
pour la correction d'erreur, on utilise l'algorithme Reed-Solomon.

5. Procédé selon l'une des revendications précédentes,
**caractérisé en ce que**
pour générer les différentes séquences de bits, on inverse ou on met à la valeur "indéterminée" les bits incertains dans l'ordre de leur incertitude, c'est-à-dire que l'on inverse ou on met à la valeur "indéterminée" tout d'abord le bit pour lequel la valeur de gris de la zone d'image qui lui est associée est la plus proche de la valeur seuil de conversion binaire (3).

6. Procédé selon l'une des revendications précédentes,
**caractérisé en ce que**
pour générer chaque séquence de bits, on inverse ou met à la valeur "indéterminée" soit aucun, soit un soit plusieurs bits incertains et/ou **en ce que** le nombre des bits incertains à inverser ou à mettre à la valeur "indéterminée" est limité à une valeur maximale.

7. Procédé selon l'une des revendications précédentes,
**caractérisé en ce que**
l'on classe comme zones d'image incertaines (4) celles des zones d'image dont la valeur de gris passe au-dessous d'une distance déterminée (5) en particulier réglable par rapport à la valeur seuil de conversion binaire (3).

8. Procédé selon l'une des revendications précédentes,
**caractérisé en ce que**
on saisit les positions des zones d'image incertaines (4) dans l'image en valeurs de gris, en particulier **en ce que** pour saisir les positions des zones d'image incertaines (4), on saisit la position respective du bit dit incertain de la séquence de bits générée, qui est associé à la zone d'image incertaine (4).

9. Procédé selon l'une des revendications précédentes,
**caractérisé en ce que**
on détecte la valeur seuil de conversion binaire (3) en se basant sur des bits de données (2) prédéterminés dans le code (1), ou
**en ce que** l'on utilise à titre de valeur seuil de conversion binaire (3) une valeur prédéterminée, ou
**en ce que** l'on détecte dynamiquement, en particulier en continu la valeur seuil de conversion binaire (3) en fonction de l'évolution des valeurs de gris sur les zones d'image saisies.

10. Procédé selon l'une des revendications précédentes,
**caractérisé en ce que**
pour détecter la valeur seuil dynamique de conversion binaire (3), on utilise uniquement celles des zones d'image dont la valeur de gris présente une distance minimale déterminée (5) par rapport à la valeur seuil actuelle de conversion binaire (3).

11. Procédé selon l'une des revendications précédentes,
**caractérisé en ce que**
on utilise à titre de valeur de gris d'une zone d'image la valeur de gris respective du centre géométrique de la zone d'image, ou **en ce que** l'on utilise à titre de valeur de gris d'une zone d'image une valeur de gris respective moyenne détectée sur la surface de la zone d'image.

12. Procédé selon l'une des revendications précédentes,
**caractérisé en ce que**
le nombre maximal des erreurs de bits corrigibles par l'algorithme de correction d'erreur est réglable et/ou
**en ce que** l'on utilise à titre de code (1) le code Datamatrix ECC 200, le code QR ou le code dit Maxicode.

13. Procédé selon l'une des revendications précédentes,
**caractérisé en ce que**
l'algorithme de correction d'erreur fournit soit une séquence de bits corrigée soit un signal d'erreur si une correction d'erreur n'a pas été possible.

14. Procédé selon la revendication 13,
**caractérisé en ce que**
la séquence de bits corrigée est décodée.
